# EUROPEAN PATENT APPLICATION

(11) **EP 4 746 320 A1**
(43) Date of publication of application: **20.05.2026**
(21) Application number: 25188098.5
(22) Date of filing: 08.07.2025
(51) Int. Cl.: H04J 3/16, H04B 1/00, G06F 3/05, H04L 5/00

(54) **RADIO FREQUENCY INTERFACE TRANSMITTING DEVICE AND METHOD, RADIO FREQUENCY INTERFACE RECEIVING DEVICE AND METHOD, CHIP, BASE STATION, AND TERMINAL**

(30) Priority: 13.11.2024 CN 202411616436
(71) Applicant: Sanechips Technology Co., Ltd., Shenzhen, Guangdong 518055 (CN)
(72) Inventor: WANG, Xiyu, Shenzhen, 518055 (CN); GU, Yantao, Shenzhen, 518055 (CN)
(74) Representative: Canzler & Bergmeier Patentanwälte Partnerschaft mbB

(57) **Abstract**

The present invention provide a RF interface transmitting device and a transmitting method for an RF interface, a RF interface receiving device and a receiving method for an RF interface, and a chip. The RF interface transmitting device includes a transmitting controller (100) including a service data interleaving unit (101), a delay adjustment amount determination unit (102), and a framer unit (103). The service data interleaving unit (101) is configured to serially interleave data of a plurality of data channels based on a current interleaving pattern to form interleaved data of one or more periods. The delay adjustment amount determination unit (102) is configured to determine a delay adjustment amount of each of the data channels corresponding to the current interleaving pattern. The framer unit (103) is configured to form a service frame based on the interleaved data, and is further configured to form a management frame.

## Description

### TECHNICAL FIELD

The present invention relates to the technical field of wireless communications, and in particular, to a Radio Frequency (RF) interface transmitting device, a transmitting method for an RF interface, an RF interface receiving device, a receiving method for an RF interface, a chip, a base station, and a terminal device.

### BACKGROUND

Although an RF interface device such as a JESD204B interface or a JESD204C interface in the related technology can solve the problem of transmission delay jitter and reduce transmission delay, due to the basic characteristics of the transmission technology of such interface device, the interface device cannot automatically adapt to a change in transmission rate caused by a service change under the condition of ensuring that a transmission delay is not changed.

Some other RF interface devices such as a DigRF V4 interface can adaptively adjust a transmission bandwidth to match a change in transmission rate caused by a service change, but the interface devices cannot reduce transmission delay nor solve the problem of fixed transmission delay due to the basic characteristics of the transmission technology of such interface devices.

### SUMMARY

The present invention provides an RF interface transmitting device, a transmitting method for an RF interface, an RF interface receiving device, a receiving method for an RF interface, a chip, a base station, and a terminal device.

In a first aspect, an embodiment of the present invention provides an RF interface transmitting device, including a transmitting controller, and the transmitting controller including a service data interleaving unit, a delay adjustment amount determination unit, and a framer unit, wherein the service data interleaving unit is configured to: serially interleave data of a plurality of data channels based on a current interleaving pattern to form interleaved data of one or more periods, wherein the data of each of the data channels includes a plurality of unit data blocks, the interleaving pattern indicates a respective number of unit data blocks of each of the data channels included in the interleaved data of one period and an arrangement order of the unit data blocks of the plurality of data channels within one period, and the data of the plurality of data channels is serially interleaved based on the same interleaving pattern in the one or more periods; the delay adjustment amount determination unit is configured to: determine a delay adjustment amount of each of the data channels corresponding to the current interleaving pattern, wherein in a case where a position of a unit data block of one data channel among the plurality of data channels in the current interleaving pattern is shifted by m unit data blocks along a first direction relative to a position of the unit data block of the one data channel in a previous interleaving pattern, a historical delay adjustment amount of the one data channel corresponding to the previous interleaving pattern is shifted by m unit data blocks along a direction opposite to the first direction and then determined as the delay adjustment amount of the one data channel corresponding to the current interleaving pattern, wherein m is an integer greater than or equal to 1; and the framer unit is configured to: form a service frame based on the interleaved data, wherein the interleaved data is filled into a payload area of the service frame as payload data, and form a management frame, wherein the management frame comprises information of the delay adjustment amount of each of the data channels corresponding to the current interleaving pattern.

In a second aspect, an embodiment of the present invention provides an RF interface receiving device, including a receiving controller, and the receiving controller including a deframer unit, a service data deinterleaving unit, and a plurality of delay units, wherein the service data deinterleaving unit is configured to: receive payload data of a service frame provided by the deframer unit, and deinterleave the payload data based on an interleaving pattern to obtain data of a plurality of data channels, wherein the payload data includes interleaved data of one or more periods, the data of each of the data channels includes a plurality of unit data blocks, the interleaving pattern indicates a respective number of unit data blocks of each of the data channels included in the interleaved data of one period and an arrangement order of the unit data blocks of the plurality of data channels within one period, and the data of the plurality of data channels is serially interleaved based on the same interleaving pattern in the one or more periods; the deframer unit is configured to: deframe input data according to a service frame structure or a management frame structure to obtain the service frame or a management frame, wherein in a case where the service frame is obtained by deframing the input data, the deframer unit sends the payload data of the service frame to the service data deinterleaving unit; and in a case where the management frame is obtained by deframing the input data, the management frame includes information of the interleaving pattern and information of a delay adjustment amount of each of the data channels corresponding to the interleaving pattern; and the plurality of delay units correspond to the plurality of data channels respectively, and each of the delay units is configured to: according to the delay adjustment amount of a corresponding data channel, delay the data of the data channel by a time corresponding to the delay adjustment amount and then output the data of the data channel.

In a third aspect, an embodiment of the present invention provides a transmitting method for an RF interface, including: serially interleaving data of a plurality of data channels based on a current interleaving pattern to form interleaved data of one or more periods, wherein the data of each of the data channels includes a plurality of unit data blocks, the interleaving pattern indicates a respective number of unit data blocks of each of the data channels included in the interleaved data of one period and an arrangement order of the unit data blocks of the plurality of data channels within one period, and the data of the plurality of data channels is serially interleaved based on the same interleaving pattern in the one or more periods; determining a delay adjustment amount of each of the data channels corresponding to the current interleaving pattern, wherein in a case where a position of a unit data block of one data channel among the plurality of data channels in the current interleaving pattern is shifted by m unit data blocks along a first direction relative to a position of the unit data block of the one data channel in a previous interleaving pattern, a historical delay adjustment amount of the one data channel corresponding to the previous interleaving pattern is shifted by m unit data blocks along a direction opposite to the first direction and then determined as the delay adjustment amount of the one data channel corresponding to the current interleaving pattern, wherein m is an integer greater than or equal to 1; forming a service frame based on the interleaved data, wherein the interleaved data is filled into a payload area of the service frame as payload data; forming a management frame, wherein the management frame includes information of the delay adjustment amount of each of the data channels corresponding to the current interleaving pattern; and sending the service frame or the management frame.

In a fourth aspect, an embodiment of the present invention provides a receiving method for an RF interface, including: deframing input data according to a service frame structure or a management frame structure to obtain a service frame or a management frame; in a case where the service frame is obtained by deframing the input data, deinterleaving payload data of the service frame based on an interleaving pattern to obtain data of a plurality of data channels, wherein the payload data includes interleaved data of one or more periods, the data of each of the data channels includes a plurality of unit data blocks, the interleaving pattern indicates a respective number of unit data blocks of each of the data channels included in the interleaved data of one period and an arrangement order of the unit data blocks of the plurality of data channels within one period, and the data of the plurality of data channels is serially interleaved based on the same interleaving pattern in the one or more periods; in a case where the management frame is obtained by deframing the input data, obtaining the interleaving pattern and a delay adjustment amount of each of the data channels corresponding to the interleaving pattern based on the management frame; and according to respective delay adjustment amounts of the plurality of data channels, delaying the data of each of the data channels by a time corresponding to a respective delay adjustment amount and then outputting the data of the data channel.

In a fifth aspect, an embodiment of the present invention provides a chip, including the RF interface transmitting device according to the present invention and the RF interface receiving device according to the present invention.

In a sixth aspect, an embodiment of the present invention provides a base station, including the chip according to the present invention.

In a seventh aspect, an embodiment of the present invention provides a terminal device, including the chip according to the present invention.

According to the embodiments of the present invention, the data of the plurality of data channels is serially interleaved based on the current interleaving pattern to form the interleaved data, and the delay adjustment amount of each of the data channels corresponding to the current interleaving pattern is determined, so that the data of each of the data channels can be delayed by the time corresponding to the respective delay adjustment amount according to the respective delay adjustment amounts of the plurality of data channels and then output. Thus, the problem of crosstalk between services introduced by operations such as service link disconnection, service link establishment or transmission stop/recovery can be effectively solved under the condition of ensuring that transmission delays are not changed. Meanwhile, a bearer bandwidth of the RF interface can be adaptively adjusted according to a change in actual service transmission rate, power consumption of the RF interface can be reduced by improving utilization efficiency of the bearer bandwidth, and stability and reliability of data transmission can be improved.

### BRIEF DESCRIPTION OF DRAWINGS

In the drawings for the embodiments of the present invention:
FIG. 1 is a schematic block diagram of a transmitting controller of an RF interface transmitting device according to an embodiment of the present invention;
FIG. 2 is another schematic block diagram of a transmitting controller of an RF interface transmitting device according to an embodiment of the present invention;
FIG. 3 is a schematic structural diagram of a service frame according to an embodiment of the present invention;
FIG. 4 is a schematic structural diagram of a management frame according to an embodiment of the present invention;
FIG. 5 is another schematic block diagram of a transmitting controller of an RF interface transmitting device according to an embodiment of the present invention;
FIG. 6 illustrates an example of a transmission timing of a management frame according to an embodiment of the present invention;
FIG. 7 is a schematic block diagram of an RF interface transmitting device according to an embodiment of the present invention;
FIG. 8 is a flowchart illustrating a transmitting method for an RF interface according to an embodiment of the present invention;
FIG. 9 is a detailed flowchart of operation S120 in a transmitting method for an RF interface according to an embodiment of the present invention;
FIG. 10 is another flowchart illustrating a transmitting method for an RF interface according to an embodiment of the present invention;
FIG. 11 is another flowchart illustrating a transmitting method for an RF interface according to an embodiment of the present invention;
FIG. 12 is a detailed flowchart of operation S150 in a transmitting method for an RF interface according to an embodiment of the present invention;
FIG. 13 is a schematic block diagram of a receiving controller of an RF interface receiving device according to an embodiment of the present invention;
FIG. 14 is another schematic block diagram of a receiving controller of an RF interface receiving device according to an embodiment of the present invention;
FIG. 15 illustrates an example of delay adjustment according to an embodiment of the present invention;
FIG. 16 is another schematic block diagram of a receiving controller of an RF interface receiving device according to an embodiment of the present invention;
FIG. 17 is a schematic block diagram of an RF interface receiving device according to an embodiment of the present invention;
FIG. 18 is a flowchart illustrating a receiving method for an RF interface according to an embodiment of the present invention;
FIG. 19 is a detailed flowchart of operation S240 in a receiving method for an RF interface according to an embodiment of the present invention;
FIG. 20 illustrates a typical application scenario of the RF interface devices according to the embodiments of the present invention;
FIG. 21 illustrates a connection relationship between a transmitting controller and a transmitting physical layer of an RF interface transmitting device according to an embodiment of the present invention; and
FIG. 22 illustrates a connection relationship between a receiving controller and a receiving physical layer of an RF interface receiving device according to an embodiment of the present invention.

### DETAIL DESCRIPTION OF EMBODIMENTS

In order to enable those of ordinary skill in the art to better understand the technical solutions of the present invention, the embodiments of the present invention are described in detail below with reference to the drawings.

The present invention will be described more fully below with reference to the drawings, but the embodiments illustrated may be embodied in different forms, and the present invention should not be interpreted as being limited to the embodiments described below. Rather, the embodiments are provided to make the present invention thorough and complete, and are intended to enable those of ordinary skill in the art to fully understand the scope of the present invention.

The drawings for the embodiments of the present invention are intended to provide a further understanding of the embodiments of the present invention and constitute a part of the specification. Together with the specific embodiments of the present invention, the drawings are used to explain the present invention, but do not constitute any limitation to the present invention. The above and other features and advantages will become more apparent to those of ordinary skill in the art from the description of the specific embodiments with reference to the drawings.

The present invention can be described with reference to plans and/or cross-sectional views with the aid of idealized schematic diagrams of the present invention. Accordingly, the exemplary drawings may be modified according to manufacturing techniques and/or tolerances.

All the embodiments of the present invention and the features therein may be combined with each other if no conflict is incurred.

The terms used herein are merely used to describe the specific embodiments, and are not intended to limit the present invention. The term "and/or" used herein includes any and all combinations of one or more associated listed items. The terms "one" and "the" used herein which indicate a singular form are intended to include a plural form, unless expressly stated in the context. The terms "include" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present invention, and should not be interpreted in an idealized or overly formal sense unless expressly so defined herein.

Although an RF interface device such as a JESD204B interface or a JESD204C interface in the related technology can solve the problem of transmission delay jitter and reduce transmission delay, due to the basic characteristics of the transmission technology of such interface device, a distribution pattern of different transmission services in a frame structure cannot be changed, a service link needs to be disconnected and reestablished once the distribution pattern is changed, but a delay relationship under the original service link does not exist after the service link is disconnected and reestablished. This means that any time of link disconnection and reestablishment may cause a delay jitter to all service transmissions which have established link, such that the interface device cannot automatically adapt to a change in transmission rate caused by a service change under the condition of ensuring that a transmission delay is not changed. Therefore, the interface can merely adopt a fixed-rate transmission mode, and the RF interface adopting this technique needs to construct a service distribution pattern in a data frame structure at the beginning of link establishment based on the maximum transmission service combination and peak traffic. If some services currently have no actual data transmission demands or a service which is not transmitted continuously is in an idle state, those services also need to send invalid data on the JESD204B interface or the JESD204C interface, so as to ensure that the RF interface can stably and reliably operate when those services have data transmission demands. The transmission of the invalid data wastes a large amount of bearer bandwidth and power consumption.

Some other RF interface devices such as a DigRF V4 interface can adaptively adjust a transmission bandwidth to match a change in transmission rate caused by a service change, but the interface devices cannot reduce transmission delay nor solve the problem of fixed transmission delay due to the basic characteristics of the transmission technology of such interface devices. This is because a basic unit desired to be transmitted on the DigRF V4 interface is a data frame, buffering the data frame may increase a transmission delay. In addition, the DigRF V4 interface sends the data frame in a polling manner, and in an application scenario where multiple services are concurrently sent, an adjustment to any service or discontinuous transmission/reception of any service may cause jittering of delays of transmission/reception of the other services. For example, two sub-carrier (cc) services cc0 and cc1 that are the same in rate need to transmit data currently, and since a payload area of each data frame for the DigRF V4 interface merely carries service data of a same cc service, a poller responsible for distributing transmission time slices monitors a data buffer of each of the cc services in real time. Once it is found that the data buffer of the service cc0 is filled with one frame of data, the data is sent to a subsequent framing module for processing. After the transmission of the data of the service cc0 is completed, the data of the service cc1 is sent to the framing module for processing, then the data of the service cc0 is sent, then the data of the service cc1 is sent, and so on. If the system deletes a transmission connection of the service cc0, the data frame of the service cc1 is sent in advance due to no blocking from the service cc0; on the contrary, if the system adds a transmission connection of a service cc2, the transmissions of the data frames of the service cc0 and the service cc1 are adjusted backward by certain time intervals under the effect of the service cc2, and the larger the transmission bandwidth of the newly added service cc2, the greater the effect on the service cc0 and the service cc1. Therefore, a change of any transmission service (deletion or addition of the transmission service) means a change of a sending position of a data frame of an existing service in time, which is regarded as a delay jitter from the perspective of a receiving end, and is unacceptable to system-level service transmission.

A baseband signal at a 5G mobile communication physical layer is often faced with service addition/deletion or discontinuous transmission/reception of service during transmission, which results in a change in transmission rate and the problem of delay jitter, and these problems seriously interfere with stable and reliable data transmission desired by mobile communication. In addition, since real-time performance of data transmission is also a key indicator for evaluating performance of an RF interface device, both a base station and a mobile terminal need such an RF interface device that the RF interface device can automatically adapt to the change in transmission rate, remove the delay jitter, and reduce a transmission delay as much as possible.

In order to solve the problems existing in the high-speed interfaces in the related technology, the present invention proposes a new private frame structure, and proposes a high-bandwidth and low-latency RF interface device supporting variable rate and fixed delay by optimizing protocol processing.

An embodiment of the present invention provides an RF interface transmitting device.

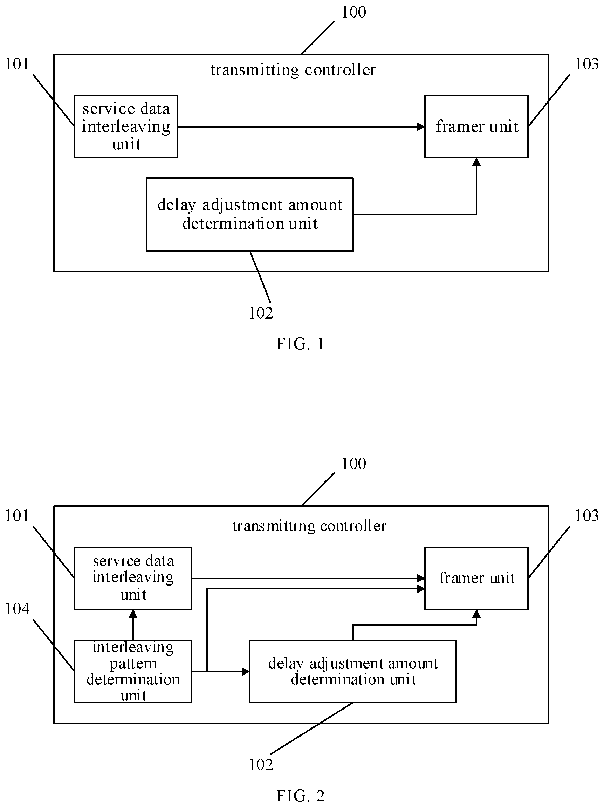

FIG. 1 is a schematic block diagram of a transmitting controller of an RF interface transmitting device according to an embodiment of the present invention.

As shown in FIG. 1, the RF interface transmitting device according to the embodiment of the present invention includes a transmitting controller 100 including a service data interleaving unit 101, a delay adjustment amount determination unit 102, and a framer unit 103.

The service data interleaving unit 101 is configured to serially interleave data of a plurality of data channels based on a current interleaving pattern to form interleaved data of one or more periods. The data of each of the data channels includes a plurality of unit data blocks. The interleaving pattern indicates a respective number of unit data blocks of each of the data channels included in the interleaved data of one period and an arrangement order of the unit data blocks of the plurality of data channels within one period. The data of the plurality of data channels is serially interleaved based on the same interleaving pattern in the one or more periods.

According to the embodiment of the present invention, the data of each of the data channels may include a plurality of data blocks in units of samples, and one sample is formed by a set of in-phase/quadrature (I/Q) data. For example, when sampling precision of the I/Q data is 12 bits, one sample may be data represented by 24 bits. The samples in a same product represent the same precision.

The interleaving pattern may include the number of unit data blocks of each of the data channels in the interleaved data of one period and the arrangement order of the unit data blocks of the data channels within one period. For example, three cc services cc0, cc1, and cc2 need to transmit data, that is, the data needs to be transmitted on three data channels, then the interleaving pattern may be expressed as:
s0, s1, s1, s2
where s0 denotes a sample of the data channel corresponding to the service cc0, s1 denotes a sample of the data channel corresponding to the service cc1, and s2 denotes a sample of the data channel corresponding to the service cc2. This exemplary interleaving pattern indicates that the interleaved data of one period includes one sample of the service cc0, two samples of the service cc1, and one sample of the service cc2 and the samples are arranged in the order
from the service cc0 to the service cc1 to the service cc2. The interleaving pattern does not change if no transmission service is changed, and the data of the data channels corresponding to the transmission services is serially interleaved based on the same interleaving pattern in each period.

The delay adjustment amount determination unit 102 is configured to determine a delay adjustment amount of each of the data channels corresponding to the current interleaving pattern. In a case where a position of a unit data block of one data channel among the plurality of data channels in the current interleaving pattern is shifted by m unit data blocks along a first direction relative to a position of the unit data block of the one data channel in a previous interleaving pattern, a historical delay adjustment amount of the one data channel corresponding to the previous interleaving pattern is shifted by m unit data blocks along a direction opposite to the first direction and then determined as the delay adjustment amount of the one data channel corresponding to the current interleaving pattern, where m is an integer greater than or equal to 1.

For example, at first two cc services cc0 and cc1 need to transmit data, an interleaving pattern is, for example, s0, s1, s1, which indicates that the interleaved data of one period includes one sample of the service cc0 and two samples of the service cc1 and the samples are arranged in the order from the service cc0 to the service cc1. Then a service cc2 is added and has such a position relationship that the service cc2 is between the service cc0 and the service cc1. In this case, the interleaving pattern may be changed to, for example, s0, s2, s2, s2, s2, s1, s1, which indicates that the interleaved data of one period includes one sample of the service cc0, four samples of the service cc2, and two samples of the service cc1 and the samples are arranged in the order from the service cc0 to the service cc2 to the service cc1. That is, a position of data of a data channel corresponding to the service cc1 in the current interleaving pattern is shifted backward (i.e., along the first direction) by four samples relative to a position of the data of the data channel corresponding to the service cc1 in the previous interleaving pattern. If a delay amount of the data channel corresponding to the service cc1 is not adjusted, for a receiving side, a delay of the service cc0 does not change while the service cc1 is delayed by four samples. In order to realize fixed delays, the delay amount of the data channel corresponding to the service cc1 needs to be adjusted forward (i.e., along the direction opposite to the first direction) by four samples.

According to the embodiment of the present invention, the delay adjustment amount determination unit 102 is further configured to determine, in a case where the previous interleaving pattern does not exist, the delay adjustment amount of each of the data channels corresponding to the current interleaving pattern to be a specified value, and determine, in a case where one data channel among the plurality of data channels does not have a historical delay adjustment amount corresponding to the previous interleaving pattern, the delay adjustment amount of the one data channel corresponding to the current interleaving pattern to be the specified value.

In the above example, a data channel corresponding to the newly added service cc2 does not have a historical delay adjustment amount corresponding to the previous interleaving pattern, so a delay adjustment amount of the data channel may be determined to be a specified value according to service requirements.

The framer unit 103 is configured to form a service frame based on the interleaved data, and the interleaved data is filled into a payload area of the service frame as payload data. The framer unit 103 is further configured to form a management frame including information of the delay adjustment amount of each of the data channels corresponding to the current interleaving pattern.

As shown in FIG. 1, the service data interleaving unit 101 sends the interleaved data to the framer unit 103 to form the service frame, and the delay adjustment amount determination unit 102 sends the delay adjustment amount of each of the data channels corresponding to the current interleaving pattern to the framer unit 103 to form the management frame.

It should be noted that although the delay adjustment amount determination unit 102 is shown as being directly connected to the framer unit 103 in FIG. 1, those of ordinary skill in the art can understand that the delay adjustment amount determination unit 102 may be indirectly connected to the framer unit 103 via a component such as a storage device or a register, that is, the delay adjustment amount determination unit 102 may send the delay adjustment amount to the storage device or the register, and the framer unit 103 may acquire the delay adjustment amount by reading the storage device or the register. It should be noted that the arrows in the drawings of the present invention are intended to indicate flow directions of data and/or signals between the components, and two components connected by one arrow do not necessarily have a direct connection relationship.

According to the embodiment of the present invention, the delay adjustment amount of each of the data channels corresponding to the current interleaving pattern may be sent to the receiving side through the management frame. The receiving side may delay the data of the data channel by a time corresponding to the delay adjustment amount according to the received delay adjustment amount and then output the data of the data channel.

According to the embodiment of the present invention, the delay adjustment amount may include a first delay adjustment amount and a second delay adjustment amount, and the delay adjustment amount determination unit 102 is configured to shift, in a case where the position of the unit data block of the one data channel among the plurality of data channels in the current interleaving pattern is shifted by m unit data blocks along the first direction relative to the position of the unit data block of the one data channel in the previous interleaving pattern, a first historical delay adjustment amount of the one data channel corresponding to the previous interleaving pattern by m unit data blocks along the direction opposite to the first direction; set, in a case where the shifted first historical delay adjustment amount is a negative number, the first delay adjustment amount of the one data channel corresponding to the current interleaving pattern to be 0, and set a difference between a second historical delay adjustment amount of the one data channel corresponding to the previous interleaving pattern and a size of a first number of unit data blocks as the second delay adjustment amount of the one data channel corresponding to the current interleaving pattern, where the first number being an absolute value of the negative number; and set, in a case where the shifted first historical delay adjustment amount is not a negative number, the shifted first historical delay adjustment amount as the first delay adjustment amount of the one data channel corresponding to the current interleaving pattern, and set the second delay adjustment amount of the one data channel corresponding to the current interleaving pattern to be equal to the second historical delay adjustment amount of the one data channel corresponding to the previous interleaving pattern.

According to the embodiment of the present invention, the delay adjustment amount of the data channel may include two parts, i.e., the first delay adjustment amount and the second delay adjustment amount. That is, the embodiment of the present invention provides two delay adjustment modes, one is implemented by a delay line, and the other is implemented by a delay storage unit (for example, implemented as a buffer). The first delay adjustment amount and the second delay adjustment amount of each of the data channels corresponding to the current interleaving pattern may be sent to the receiving side through the management frame. The receiving side may delay the data of the data channel by a time corresponding to the first delay adjustment amount according to the received first delay adjustment amount and then send the data of the data channel to a delay storage unit corresponding to the data channel, and output the data of the data channel when a size of the data of the data channel stored in the delay storage unit reaches a storage capacity corresponding to the second delay adjustment amount.

According to the embodiment of the present invention, the delay line may be adopted to delay the data of the data channel by the time corresponding to the first delay adjustment amount. For example, the data of the data channel may be delayed by a number of beats corresponding to the first delay adjustment amount through the delay line, and each of the beats has a fixed time length, so that the data of the data channel may be delayed by the time corresponding to the first delay adjustment amount.

It should be understood by those of ordinary skill in the art that the first delay adjustment amount may be expressed as a number of samples and the second delay adjustment amount may be expressed as an expected storage capacity of the delay storage unit. Still staking the above example as an example, when the delay amount of the data channel corresponding to the service cc1 needs to be adjusted forward by four samples, the adjustment may be first made according to the first delay adjustment amount, that is, the first historical delay adjustment amount corresponding to the previous interleaving pattern is adjusted forward by four samples. Adjusting the first historical delay adjustment amount forward by four samples means subtracting 4 from the first historical delay adjustment amount. In a case where a difference obtained by subtracting 4 from the first historical delay adjustment amount is a negative number, since a negative beat number of the delay line is meaningless, the first delay adjustment amount corresponding to the current interleaving pattern is set to be 0. In this case, the delay amount needs to be further adjusted through the delay storage unit according to the second delay adjustment amount, so as to realize fixed delays. Specifically, the adjustment is performed as follows: a difference between the second historical delay adjustment amount corresponding to the previous interleaving pattern and a size of the first number of unit data blocks (e.g., samples of 24 bits) is set as the second delay adjustment amount corresponding to the current interleaving pattern, and the first number is the absolute value of the negative number. For example, the difference obtained by subtracting 4 from the first historical delay adjustment amount is -3, so the first delay adjustment amount corresponding to the current interleaving pattern is set to be 0, and a result obtained by subtracting a size (e.g., 3×24=72 bits) of 3 (i.e., the absolute value of -3) samples from the second historical delay adjustment amount is set as the second delay adjustment amount corresponding to the current interleaving pattern. On the other hand, in a case where the difference obtained by subtracting 4 from the first historical delay adjustment amount is not a negative number, the difference is set as the first delay adjustment amount corresponding to the current interleaving pattern, and the second historical delay adjustment amount corresponding to the previous interleaving pattern is still used as the second delay adjustment amount corresponding to the current interleaving pattern.

According to the embodiment of the present invention, the delay adjustment amount determination unit 102 is further configured to determine, in a case where the previous interleaving pattern does not exist, the first delay adjustment amount and the second delay adjustment amount of each of the data channels corresponding to the current interleaving pattern to be a first specified value and a second specified value, respectively; and determine, in a case where the one data channel among the plurality of data channels does not have the historical delay adjustment amount corresponding to the previous interleaving pattern, the first delay adjustment amount and the second delay adjustment amount of the one data channel corresponding to the current interleaving pattern to be the first specified value and the second specified value, respectively.

**In** the above example, the data channel corresponding to the newly added service cc2 does not have a historical delay adjustment amount corresponding to the previous interleaving pattern, so that a first delay adjustment amount and a second delay adjustment amount of the data channel may be determined to be the first specified value and the second specified value respectively according to service requirements.

The RF interface device according to the embodiment of the present invention can effectively solve the problem of crosstalk between services introduced by operations such as service link disconnection, service link establishment or transmission stop/recovery under the condition of ensuring that the transmission delays are not changed. Meanwhile, the RF interface device according to the embodiment of the present invention can adaptively adjust a bearer bandwidth of the RF interface based on a change in actual service transmission rate, reduce power consumption of the RF interface by improving utilization efficiency of the bearer bandwidth, and improve stability and reliability of data transmission.

FIG. 2 is another schematic block diagram of a transmitting controller of an RF interface transmitting device according to an embodiment of the present invention.

As shown in FIG. 2, the transmitting controller 100 of the RF interface transmitting device according to the embodiment of the present invention may further include an interleaving pattern determination unit 104.

The interleaving pattern determination unit 104 is configured to determine the interleaving pattern according to at least one of information of a plurality of services respectively corresponding to the plurality of data channels or user configuration information. The management frame may further include information of the current interleaving pattern.

As shown in FIG. 2, the interleaving pattern determination unit 104 sends the interleaving pattern to the service data interleaving unit 101, the delay adjustment amount determination unit 102, and the framer unit 103 respectively, so as to enable the service data interleaving unit 101 to perform data interleaving based on the interleaving pattern, enable the delay adjustment amount determination unit 102 to determine the delay adjustment amount of each of the data channels based on the current interleaving pattern and the previous interleaving pattern, and enable the framer unit 103 to form the management frame including the interleaving pattern.

It should be noted that although the interleaving pattern determination unit 104 is shown in FIG. 2 as being directly connected to each of the service data interleaving unit 101, the delay adjustment amount determination unit 102, and the framer unit 103, those of ordinary skill in the art can understand that the interleaving pattern determination unit 104 may be indirectly connected to one or more of the service data interleaving unit 101, the delay adjustment amount determination unit 102, and the framer unit 103 via a component such as a storage device or a register, that is, the interleaving pattern determination unit 104 may send the interleaving pattern to the storage device or the register, and one or more of the service data interleaving unit 101, the delay adjustment amount determination unit 102, and the framer unit 103 may acquire the interleaving pattern by reading the storage device or the register.

According to the embodiment of the present invention, the interleaving pattern may be determined according to actual situations of the plurality of services and/or according to configuration by a user, and the current interleaving pattern may be sent to the receiving side through the management frame.

According to the embodiment of the present invention, the interleaving pattern determination unit 104 is configured to determine the interleaving pattern such that a ratio of data sizes of the plurality of data channels in the interleaving pattern is the same as a ratio of transmission bandwidths of the plurality of services. Specifically, the interleaving pattern is determined such that a ratio of respective numbers of unit data blocks of the plurality of data channels in the interleaving pattern is the same as the ratio of the transmission bandwidths of the plurality of services.

For example, three cc services cc0, cc1, and cc2 need to transmit data, a transmission bandwidth of the service cc1 is twice that of the service cc0, and a transmission bandwidth of the service cc2 is the same as that of the service cc0, then an interleaving pattern may be expressed as : s0, s1, s1, s2

The exemplary interleaving pattern indicates that the interleaved data of one period includes one sample of the service cc0, two samples of the service cc1, and one sample of the service cc2, and a ratio of the numbers of samples of the services is the same as a ratio of the transmission bandwidths of the services.

According to the embodiment of the present invention, the service frame may further include validity indication information for indicating whether the data of each of the data channels in the interleaved data is valid. The service data interleaving unit 101 is further configured to fill, in a case where there is no data in one data channel among the plurality of data channels, invalid data as the data of the one data channel into a corresponding position of a unit data block of the one data channel in the interleaving pattern to obtain the interleaved data. The framer unit 103 is further configured to configure the validity indication information to indicate that the data of the one data channel is invalid.

After the interleaving pattern is formed according to the services having data to be transmitted and transmission bandwidth configuration of each service, the service data interleaving unit 101 may serially interleave the data of the plurality of data channels based on the current interleaving pattern. However, the data of the different services may arrive at different moments, for example, the data of the service cc0 arrives while the data of the service cc1 does not arrive. At a time boundary of the service frame, in order to ensure real-time transmission of the service frame (that is, the data does not need to be buffered at the RF interface transmitting device), the service data interleaving unit 101 may fill invalid data as the data of the data channel corresponding to the service cc1 into a corresponding position of a unit data block of the data channel when serially interleaving the data of each of the data channels to form the interleaved data, and the framer unit 103 may mark the data of the data channel corresponding to the service cc1 as invalid through the validity indication information when forming the service frame. The invalid data may be implemented in a specific data format, which is not limited in the present invention.

According to the embodiment of the present invention, the service frame may further include a service frame header signature configured to indicate that the frame is the service frame.

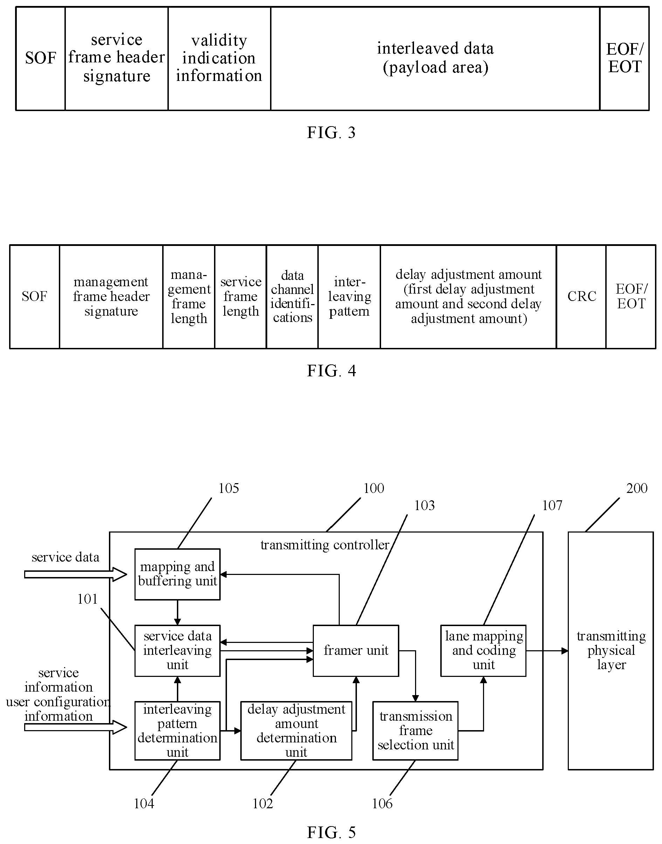

FIG. 3 is a schematic structural diagram of a service frame according to an embodiment of the present invention.

As shown in FIG. 3, the service frame according to the embodiment of the present invention may include: Start of Frame (SOF), service frame header signature, validity indication information, interleaved data, and End of Frame (EOF) or End of Transmission (EOT).

The SOF indicates a start position of a frame on each lane, the EOF indicates an end position of a current frame, the EOT indicates that the current frame ends and a current burst also ends. Code descriptions of the SOF, the EOF, and the EOT may be defined with reference to the DigRF V4 protocol or may be defined according to a Physical Coding Sublayer (PCS) protocol.

The service frame header signature is configured to indicate that the frame is the service frame, so as to distinguish the frame from the management frame. The validity indication information is configured to indicate whether the data of each of the data channels in the interleaved data is valid, so as to enable the receiving side to discard the data of the data channel which is indicated as invalid according to the validity indication information. The service frame header signature and the validity indication information may be implemented with various coding methods capable of achieving the above purposes, which is not limited in the present invention.

According to the embodiment of the present invention, the management frame may further include information of a management frame length and information of a service frame length. The management frame length is configured to indicate a length of the management frame, and the service frame length is configured to indicate a length of the service frame.

According to the embodiment of the present invention, the management frame may further include a management frame header signature configured to indicate that the frame is the management frame.

According to the embodiment of the present invention, the management frame may further include information of data channel identifications. In the interleaving pattern, the respective number of unit data blocks of each of the data channels included in the interleaved data of one period and the arrangement order of the unit data blocks of the plurality of data channels within one period are indicated by an arrangement mode of the data channel identifications of the plurality of data channels.

FIG. 4 is a schematic structural diagram of a management frame according to an embodiment of the present invention.

As shown in FIG. 4, the management frame according to the embodiment of the present invention may include: SOF, management frame header signature, management frame length, service frame length, data channel identifications, interleaving pattern, delay adjustment amount (including first delay adjustment amount and second delay adjustment amount), Cyclic Redundancy Check (CRC), and EOF or EOT.

The respective meanings of the SOF, the EOF, and the EOT are the same as those of the SOF, the EOF, and the EOT in the service frame, and will not be repeated here.

The management frame header signature is configured to indicate that the frame is the management frame, so as to distinguish the frame from the service frame. The management frame length and the service frame length are configured to indicate the length of the management frame and the length of the service frame, respectively. The data channel identifications are configured to indicate currently activated data channels, and the interleaving pattern may be formed according to the arrangement of the data channel identifications. The management frame header signature, the management frame length, the service frame length, and the data channel identifications may be implemented with various coding methods capable of achieving the above purposes, which is not limited in the present invention.

FIG. 5 is another schematic block diagram of a transmitting controller of an RF interface transmitting device according to an embodiment of the present invention.

As shown in FIG. 5, the transmitting controller 100 of the RF interface transmitting device according to the embodiment of the present invention may further include a mapping and buffering unit 105 configured to receive a plurality of subcarrier data streams respectively corresponding to the plurality of services, map the plurality of subcarrier data streams to buffers of the plurality of data channels, and provide the data in the buffers for the service data interleaving unit 101.

According to the embodiment of the present invention, the mapping and buffering unit 105 may route the data streams of the plurality of services to the buffers of the data channels corresponding to the services according to system configuration. It should be noted that the buffers are provided mainly for solving the problem of blocking of a transmission path of the service frame which may be caused by the transmission of the management frame. As shown in FIG. 5, after forming the management frame, the framer unit 103 may, for example, send information of management frame validation to the mapping and buffering unit 105 and the service data interleaving unit 101 respectively to inform the mapping and buffering unit 105 and the service data interleaving unit 101 that the management frame is currently prepared to be sent, so as to enable the mapping and buffering unit 105 to buffer the received service data and enable the service data interleaving unit 101 to suspend the data interleaving. In a case where there is no blocking, as long as there is data in the buffer of each of the data channels, the mapping and buffering unit 105 may send the data to the service data interleaving unit 101 in real time for the data interleaving.

As shown in FIG. 5, the transmitting controller 100 of the RF interface transmitting device according to the embodiment of the present invention may further include a transmission frame selection unit 106 configured to select the service frame or the management frame as a transmission frame.

As shown in FIG. 5, after receiving the service frame and the management frame sent by the framer unit 103, the transmission frame selection unit 106 may select one of the service frame and the management frame as the transmission frame based on system configuration.

According to the embodiment of the present invention, the transmission frame selection unit 106 is configured to select, in a case where system initialization is completed and link establishment is performed for the first time, the management frame as the transmission frame at a start position of a first burst; and select, in a case where contents of the management frame are changed, the management frame as the transmission frame at a start position of another burst after the link establishment is completed.

With the management frame selected as the transmission frame merely in a case where the contents of the management frame are changed, an influence of the transmission of the management frame on the transmission of the service frame can be minimized, so as to reduce the problem of blocking of the transmission path of the service frame which may be caused by the transmission of the management frame as much as possible.

According to other embodiments of the present invention, the transmission frame selection unit 106 is configured to select the management frame as the transmission frame at a start position of each burst after the link establishment is completed.

Selecting the management frame as the transmission frame at the start position of each burst can ensure that the receiving side can perform data deinterleaving, discard invalid data from the data channels, and perform delayed output of data based on the contents of the management frame corresponding to the burst.

According to the embodiment of the present invention, the transmission frame selection unit 106 is configured to cause, in a case where the management frame is selected as the transmission frame, the management frame to be continuously and repeatedly sent for n times, where n is an integer greater than 1.

By continuously sending the management frame for a plurality of times, it is ensured that the receiving side can reliably receive the management frame.

According to the embodiment of the present invention, the transmission frame selection unit 106 is configured to cause transmission priority of the management frame to be higher than that of the service frame.

When the contents of the management frame are changed, it needs to ensure that the receiving side may process the received data based on the updated contents of the management frame. Therefore, the transmission priority of the management frame needs to be set to be higher than that of the service frame.

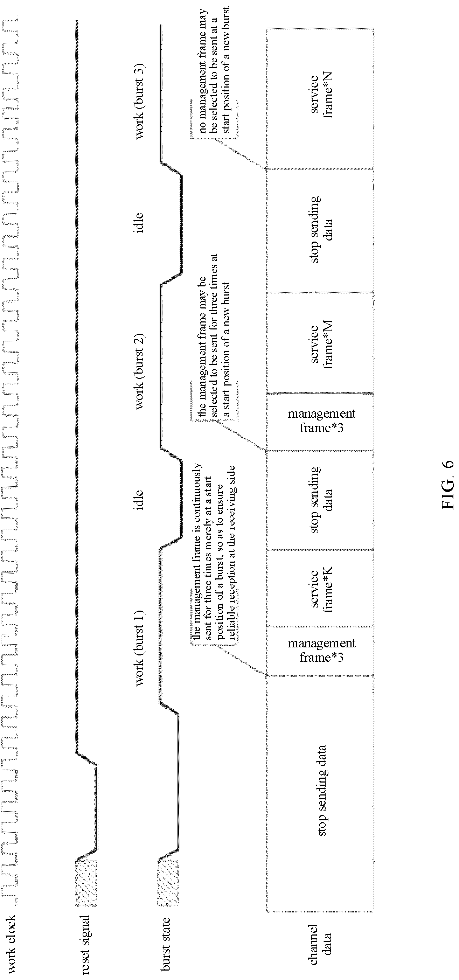

FIG. 6 illustrates an example of a transmission timing of a management frame according to an embodiment of the present invention.

As shown in FIG. 6, when a burst state is an idle state, data transmission on a channel is stopped; when the burst state is a work state, in a case where system initialization is completed and link establishment is performed for the first time, three management frames are continuously sent at a start position of a first burst (burst 1) and then a plurality of (K) data frames are sent, and three management frames may be selected to be continuously sent at a start position of a new burst (burst 2) and then a plurality of (M) data frames are sent, or no management frame is selected to be sent and a plurality of (N) service frames are directly sent in response to the contents of the management frame being not changed (burst 3). As shown in FIG. 6, in the cases where the management frames are selected to be sent (the burst 1 and the burst 2), the management frames are sent before sending the service frames, that is, the transmission priority of the management frames is higher than that of the service frames.

As shown in FIG. 5, the transmitting controller 100 of the RF interface transmitting device according to the embodiment of the present invention may further include a lane mapping and coding unit 107 connected to the transmission frame selection unit 106. The lane mapping and coding unit 107 is configured to receive the transmission frame provided by the transmission frame selection unit 106, map the transmission frame to a lane, and perform coding.

The lane mapping and coding unit 107 may perform a mapping process of a custom frame (e.g., the service frame or the management frame) to a frame on lane, reference may be made to a lane mapping process described in a DigRF V4 interface specification of a Mobile Industry Processor Interface (MIPI) for a mapping method, and a coding method may adopt those described in a related technical specification of PCS coding.

As shown in FIG. 5, the RF interface transmitting device according to the embodiment of the present invention may further include a transmitting physical layer 200 connected to the transmitting controller 100.

According to the embodiment of the present invention, the data obtained after lane mapping and PCS coding processing may be allocated to each lane of the transmitting physical layer 200 for a final transmission process. An implementation of the transmitting physical layer 200 is not limited in the present invention.

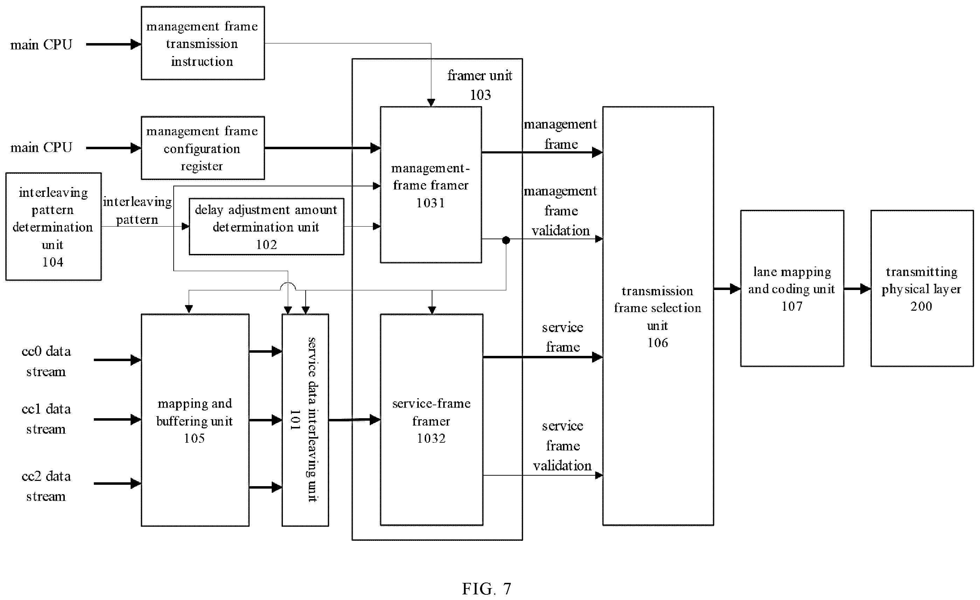

FIG. 7 is a schematic block diagram of an RF interface transmitting device according to an embodiment of the present invention.

As shown in FIG. 7, the framer unit 103 may include a management-frame framer 1031 and a service-frame framer 1032. A data stream of the service cc0, a data stream of the service cc1, and a data stream of the service cc2 may be three service data streams subjected to digital intermediate frequency processing. In a case where there is no blocking, the data streams of the three services are sent through the mapping and buffering unit 105 to the service data interleaving unit 101 for the data interleaving.

The service data interleaving unit 101 serially interleaves the data streams of the three services based on the interleaving pattern (directly or indirectly) provided by the interleaving pattern determination unit 104 to form the interleaved data, so that it is ensured that each of the data streams has the same transmission opportunity in the data frame and is endowed with a transmission capability matched with a corresponding data bandwidth, so as to reduce transmission delays of all the data streams to the greatest extent. The service data interleaving unit 101 provides the interleaved data for the service-frame framer 1032.

The service-frame framer 1032 adds the service frame header signature and the validity indication information to appropriate positions based on the service frame structure according to the embodiment of the present invention and the service frame length, and fills the interleaved data provided by the service data interleaving unit 101 into the payload area to form the service frame. The service-frame framer 1032 sends the service frame and a service frame validation signal to the transmission frame selection unit 106.

The delay adjustment amount determination unit 102 determines a delay adjustment amount of each of the services based on the interleaving pattern (directly or indirectly) provided by the interleaving pattern determination unit 104, and sends the delay adjustment amount to the management-frame framer 1031.

The management-frame framer 1031 forms the management frame based on the interleaving pattern (directly or indirectly) provided by the interleaving pattern determination unit 104, the delay adjustment amount (directly or indirectly) provided by the delay adjustment amount determination unit 102, various configuration parameters provided by a main Central Processing Unit (CPU), the management frame structure according to the embodiment of the present invention, and the management frame length. The management-frame framer 1031 may be configured to send the management frame and a management frame validation signal to the transmission frame selection unit 106 in response to a management frame transmission instruction provided by the main CPU.

The transmission frame selection unit 106 may be implemented as, for example, a merged-frame multiplexer (MUX) for realizing time division multiplexing of the service frame and the management frame. The transmission frame selection unit 106 may be configured to cause the transmission priority of the management frame to be higher than that of the service frame. At the start position of each burst, the transmission frame selection unit 106 may select whether to send the management frame according to a configuration state of a register. When a new link is established, the transmission frame selection unit 106 may forcibly continuously send a plurality of management frames. The management frame may be forcibly inserted into a middle position of a burst if necessary, in which case the transmission frame selection unit 106 needs to ensure integrity of the service frame.

An embodiment of the present invention further provides a transmitting method applied to the RF interface according to the present invention.

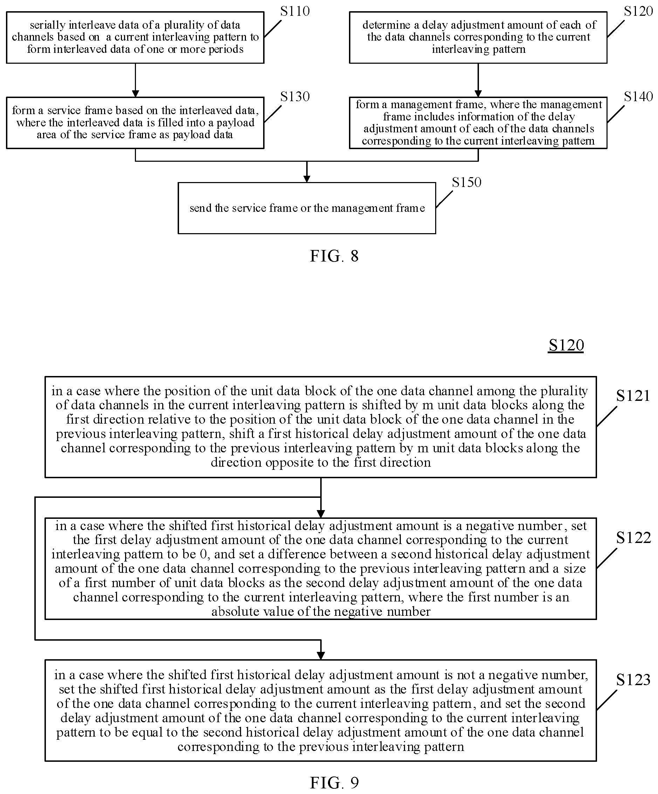

FIG. 8 is a flowchart illustrating a transmitting method for an RF interface according to an embodiment of the present invention.

As shown in FIG. 8, the transmitting method for the RF interface according to the embodiment of the present invention includes the following operations S110 to S150.

At operation S110, data of a plurality of data channels is serially interleaved based on a current interleaving pattern to form interleaved data of one or more periods.

The data of each of the data channels includes a plurality of unit data blocks, and the interleaving pattern indicates a respective number of unit data blocks of each of the data channels included in the interleaved data of one period and an arrangement order of the unit data blocks of the plurality of data channels within one period. The data of the plurality of data channels is serially interleaved based on the same interleaving pattern in the one or more periods.

At operation S120, a delay adjustment amount of each of the data channels corresponding to the current interleaving pattern is determined.

**In** a case where a position of a unit data block of one data channel among the plurality of data channels in the current interleaving pattern is shifted by m unit data blocks along a first direction relative to a position of the unit data block of the one data channel in a previous interleaving pattern, a historical delay adjustment amount of the one data channel corresponding to the previous interleaving pattern is shifted by m unit data blocks along a direction opposite to the first direction and then determined as the delay adjustment amount of the one data channel corresponding to the current interleaving pattern, where m is an integer greater than or equal to 1.

At operation S130, a service frame is formed based on the interleaved data, where the interleaved data is filled into a payload area of the service frame as payload data.

At operation S140, a management frame is formed, where the management frame includes information of the delay adjustment amount of each of the data channels corresponding to the current interleaving pattern.

At operation S150, the service frame or the management frame is sent.

According to the embodiment of the present invention, the delay adjustment amount of each of the data channels is configured to instruct a receiving side to delay the data of each of the data channels obtained by deinterleaving the interleaved data by a time corresponding to the delay adjustment amount and then output the data of the data channel.

According to the embodiment of the present invention, determining the delay adjustment amount of each of the data channels corresponding to the current interleaving pattern (i.e., operation S120) includes: determining, in a case where the previous interleaving pattern does not exist, the delay adjustment amount of each of the data channels corresponding to the current interleaving pattern to be a specified value; and determining, in a case where one data channel among the plurality of data channels does not have a historical delay adjustment amount corresponding to the previous interleaving pattern, the delay adjustment amount of the one data channel corresponding to the current interleaving pattern to be the specified value.

FIG. 9 is a detailed flowchart of operation S120 in the transmitting method for the RF interface according to an embodiment of the present invention.

According to the embodiment of the present invention, the delay adjustment amount may include a first delay adjustment amount and a second delay adjustment amount. As shown in FIG. 9, determining the delay adjustment amount of each of the data channels corresponding to the current interleaving pattern (i.e., operation S120) includes the following operations S121 to S123.

At operation S121, in a case where the position of the unit data block of the one data channel among the plurality of data channels in the current interleaving pattern is shifted by m unit data blocks along the first direction relative to the position of the unit data block of the one data channel in the previous interleaving pattern, a first historical delay adjustment amount of the one data channel corresponding to the previous interleaving pattern is shifted by m unit data blocks along the direction opposite to the first direction.

At operation S122, in a case where the shifted first historical delay adjustment amount is a negative number, the first delay adjustment amount of the one data channel corresponding to the current interleaving pattern is set to be 0, and a difference between a second historical delay adjustment amount of the one data channel corresponding to the previous interleaving pattern and a size of a first number of unit data blocks is set as the second delay adjustment amount of the one data channel corresponding to the current interleaving pattern, where the first number is an absolute value of the negative number.

At operation S123, in a case where the shifted first historical delay adjustment amount is not a negative number, the shifted first historical delay adjustment amount is set as the first delay adjustment amount of the one data channel corresponding to the current interleaving pattern, and the second delay adjustment amount of the one data channel corresponding to the current interleaving pattern is set to be equal to the second historical delay adjustment amount of the one data channel corresponding to the previous interleaving pattern.

According to the embodiment of the present invention, the first delay adjustment amount of each of the data channels is configured to instruct the receiving side to delay the data of the data channel obtained after deinterleaving by a time corresponding to the first delay adjustment amount and then send the data of the data channel to a delay storage unit corresponding to the data channel.

According to the embodiment of the present invention, the second delay adjustment amount of each of the data channels is configured to instruct the receiving side to output the data of the data channel when a size of the data of the data channel stored in the delay storage unit corresponding to the data channel reaches a storage capacity corresponding to the second delay adjustment amount.

According to the embodiment of the present invention, determining the delay adjustment amount of each of the data channels corresponding to the current interleaving pattern (i.e., operation S120) includes: determining, in a case where the previous interleaving pattern does not exist, the first delay adjustment amount and the second delay adjustment amount of each of the data channels corresponding to the current interleaving pattern to be a first specified value and a second specified value, respectively; and determining, in a case where the one data channel among the plurality of data channels does not have the historical delay adjustment amount corresponding to the previous interleaving pattern, the first delay adjustment amount and the second delay adjustment amount of the one data channel corresponding to the current interleaving pattern to be the first specified value and the second specified value, respectively.

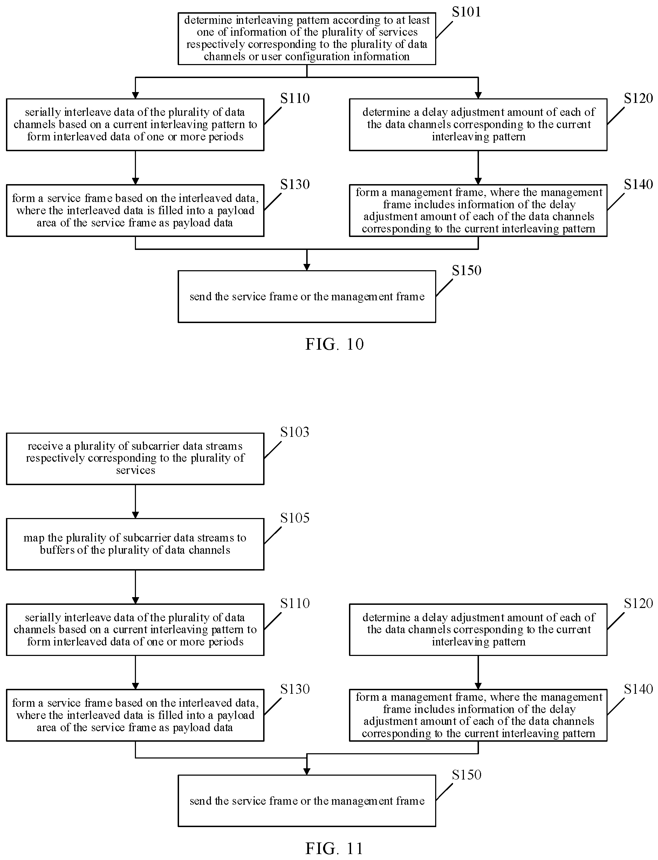

FIG. 10 is another flowchart illustrating a transmitting method for an RF interface according to an embodiment of the present invention.

As shown in FIG. 10, the transmitting method for the RF interface according to the embodiment of the present invention may further include operation S101 before operations S110 and S120.

At operation S101, the interleaving pattern is determined according to at least one of information of a plurality of services respectively corresponding to the plurality of data channels or user configuration information.

The management frame may further include information of the current interleaving pattern.

According to the embodiment of the present invention, determining the interleaving pattern (i.e., operation S101) includes: determining the interleaving pattern such that a ratio of data sizes of the plurality of data channels in the interleaving pattern is the same as a ratio of transmission bandwidths of the plurality of services, and specifically, determining the interleaving pattern such that a ratio of respective numbers of unit data blocks of the plurality of data channels in the interleaving pattern is the same as the ratio of the transmission bandwidths of the plurality of services.

According to the embodiment of the present invention, the service frame may further include validity indication information for indicating whether the data of each of the data channels in the interleaved data is valid, and serially interleaving the data of the plurality of data channels based on the current interleaving pattern (i.e., operation S110) includes: filling, in a case where there is no data in one data channel among the plurality of data channels, invalid data as the data of the one data channel into a corresponding position of a unit data block of the one data channel in the interleaving pattern to obtain the interleaved data; and forming the service frame based on the interleaved data (i.e., operation S130) includes: configuring the validity indication information to indicate that the data of the one data channel is invalid.

FIG. 11 is another flowchart illustrating a transmitting method for an RF interface according to an embodiment of the present invention.

As shown in FIG. 11, the transmitting method for the RF interface according to the embodiment of the present invention may further include operations S103 and S105 before operation S110.

At operation S103, a plurality of subcarrier data streams respectively corresponding to the plurality of services are received.

At operation S105, the plurality of subcarrier data streams are mapped to buffers of the plurality of data channels.

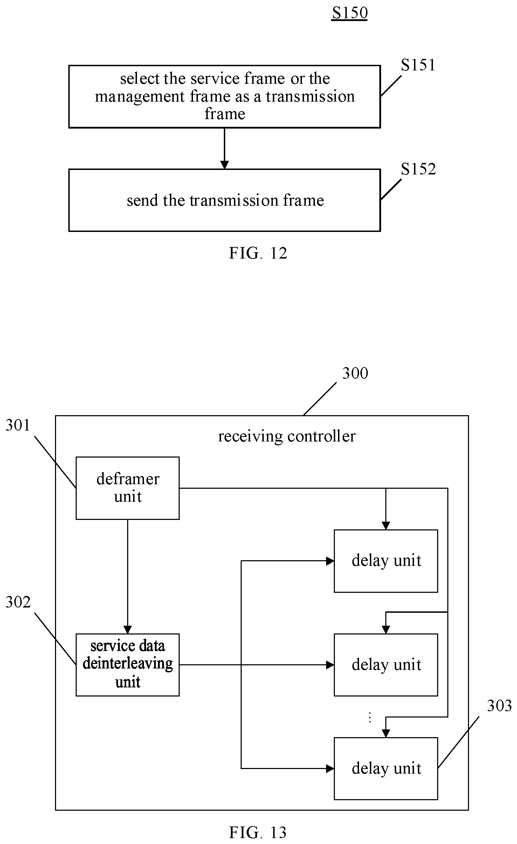

FIG. 12 is a detailed flowchart of operation S150 in the transmitting method for the RF interface according to an embodiment of the present invention.

As shown in FIG. 12, sending the service frame or the management frame (i.e., operation S150) includes operations S151 and S152.

At operation S151, the service frame or the management frame is selected as a transmission frame.

At operation S152, the transmission frame is sent.

According to the embodiment of the present invention, selecting the service frame or the management frame as the transmission frame (i.e., operation S151) includes: selecting, in a case where system initialization is completed and link establishment is performed for the first time, the management frame as the transmission frame at a start position of a first burst; and selecting, in a case where contents of the management frame are changed, the management frame as the transmission frame at a start position of another burst after the link establishment is completed.

According to other embodiments of the present invention, selecting the service frame or the management frame as the transmission frame (i.e., operation S151) includes: selecting the management frame as the transmission frame at a start position of each burst after the link establishment is completed.

According to the embodiment of the present invention, in a case where the management frame is selected as the transmission frame, the management frame is caused to be continuously and repeatedly sent for n times, with n being an integer greater than 1.

According to the embodiment of the present invention, transmission priority of the management frame is higher than that of the service frame.

The transmitting method for the RF interface provided in the embodiments of the present invention may be performed by the RF interface transmitting device according to the embodiments of the present invention. For clarity, the corresponding technical details and technical effects will not be repeatedly described in detail here.

An embodiment of the present invention further provides an RF interface receiving device.

FIG. 13 is a schematic block diagram of a receiving controller of an RF interface receiving device according to an embodiment of the present invention.

As shown in FIG. 13, the RF interface receiving device according to the embodiment of the present invention includes a receiving controller 300 including a deframer unit 301, a service data deinterleaving unit 302, and a plurality of delay units 303.

The service data deinterleaving unit 302 is configured to receive payload data of a service frame provided by the deframer unit 301, and deinterleave the payload data based on an interleaving pattern to obtain data of a plurality of data channels. The payload data includes interleaved data of one or more periods, the data of each of the data channels includes a plurality of unit data blocks, the interleaving pattern indicates a respective number of unit data blocks of each of the data channels included in the interleaved data of one period and an arrangement order of the unit data blocks of the plurality of data channels within one period, and the data of the plurality of data channels is serially interleaved based on the same interleaving pattern in the one or more periods.

The deframer unit 301 is configured to deframe input data according to a service frame structure or a management frame structure to obtain the service frame or a management frame. **In** a case where the service frame is obtained by deframing the input data, the deframer unit 301 sends the payload data of the service frame to the service data deinterleaving unit 302; and in a case where the management frame is obtained by deframing the input data, the management frame includes information of the interleaving pattern and information of a delay adjustment amount of each of the data channels corresponding to the interleaving pattern.

The plurality of delay units 303 correspond to the plurality of data channels respectively, and each of the delay units 303 is configured to delay, according to the delay adjustment amount of the corresponding data channel, the data of the data channel by a time corresponding to the delay adjustment amount and then output the data of the data channel.

It should be noted that although the deframer unit 301 is shown in FIG. 12 as being directly connected to the service data deinterleaving unit 302 and each of the plurality of delay units 303, those of ordinary skill in the art can understand that the deframer unit 301 may be indirectly connected to the service data deinterleaving unit 302 and/or the delay units 303 via a component such as a storage device or a register, that is, the deframer unit 301 may send the interleaving pattern and the delay adjustment amount included in the management frame to the storage device or the register, and the service data deinterleaving unit 302 and the delay units 303 may acquire the interleaving pattern and the delay adjustment amount respectively by reading the storage device or the register. The similar cases are described herein for several times, and will not be repeated below.

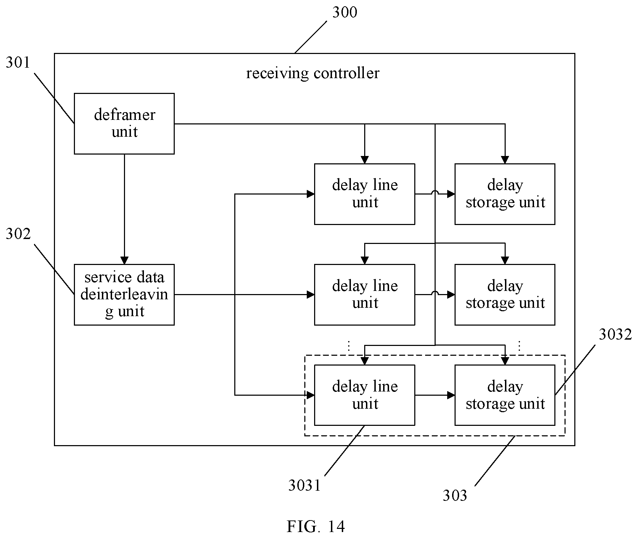

FIG. 14 is another schematic block diagram of a receiving controller of an RF interface receiving device according to an embodiment of the present invention.

According to the embodiment of the present invention, the delay adjustment amount may include a first delay adjustment amount and a second delay adjustment amount. As shown in FIG. 14, each of the plurality of delay units 303 includes a delay line unit 3031 and a delay storage unit 3032.

The service data deinterleaving unit 302 is configured to provide the obtained data of each of the plurality of data channels for the delay line unit 3031 of the delay unit 303 corresponding to the data channel.

The delay line unit 3031 is configured to delay, according to the first delay adjustment amount of the corresponding data channel, the data of the data channel by a time corresponding to the first delay adjustment amount, and then store the data of the data channel in the delay storage unit 3032 of the delay unit 303 corresponding to the data channel.

The delay storage unit 3032 is configured to output, according to the second delay adjustment amount of the corresponding data channel, the stored data of the data channel when a size of the stored data of the data channel reaches a storage capacity corresponding to the second delay adjustment amount.

According to the embodiment of the present invention, the service data deinterleaving unit 302 may perform deinterleaving, based on the interleaving pattern obtained through the management frame, on the payload data in the service frame sent by the deframer unit 301, separate data streams of all services corresponding to the data channels, and provide the data streams for the delay line units 3031 corresponding to the data channels. The delay line unit 3031 for each of the data channels receives the data stream output by the service data deinterleaving unit 302, performs delay processing according to the first delay adjustment amount of each of the data channels which is obtained through the management frame, and then sends the data subjected to delay processing to the corresponding delay storage unit 3032 for buffering. When the size of the data buffered in the delay storage unit 3032 is greater than the second delay adjustment amount of each of the data channels which is obtained through the management frame, in response to a data read request from a subsequent processing module, the delay storage unit 3032 sends read data to the subsequent processing module in a clock domain of the subsequent processing module for subsequent processing.

The delay adjustment according to the embodiments of the present invention is illustrated in detail below by a specific example.

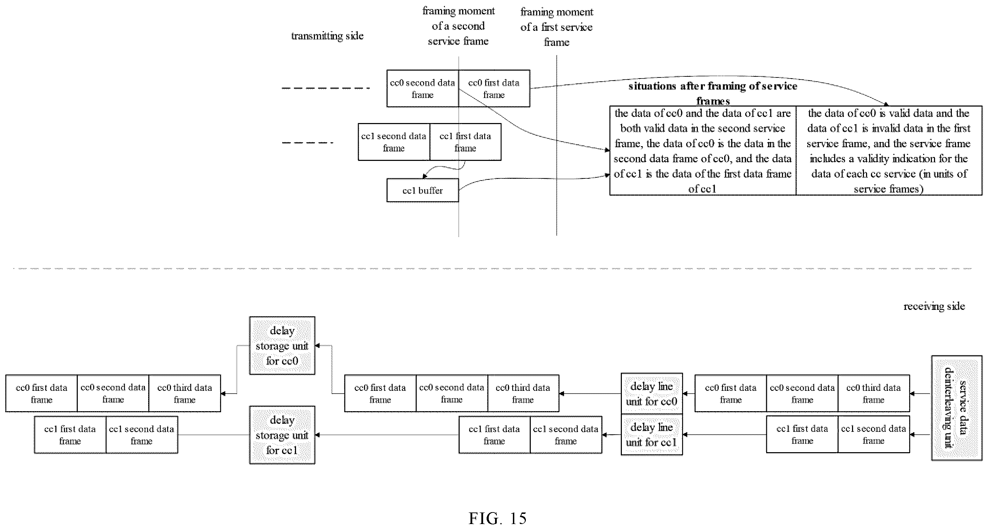

FIG. 15 illustrates an example of delay adjustment according to an embodiment of the present invention.

In the example illustrated by FIG. 15, at a transmitting side, since a System on Chip (SoC) subsystem of a chip cannot guarantee a specific timing relationship between a service cc0 and a service cc1 when issuing the two services, the framing process of the service frame according to the embodiments of the present invention may be performed once either service (the service cc0 shown in FIG. 15) arrives. As shown in FIG. 15, since the service cc1 does not arrive at a framing module at a time boundary of a first service frame, data of the service cc1 needs to be buffered and postponed to a start moment of a next service frame to participate in the framing of the service frame. As shown in FIG. 15, in the first service frame output after the framing, data of the service cc0 is valid data and data of the service cc1 is invalid data, which is indicated by validity indication information included in the first service frame.

At a receiving side, as shown in FIG. 15, data streams of the different services may be separated after the service frame is processed by the service data deinterleaving unit, at this time, the data stream of each of the services is aligned with the boundary of the service frame. In order to recover a relative timing of the data stream of each of the services at the transmitting side, a time relationship between the data streams of the respective services in the frame needs to be recovered by the delay line units of the respective data channels at the receiving side according to the first delay adjustment amounts of the respective data channels, and a relative time relationship between the data stream of the service cc0 and the data stream of the service cc1 on the frame is then recovered by the delay storage units for the respective data channels according to the second delay adjustment amounts of the respective data channels.

It should be noted that the above example is merely one example of realizing fixed delays by cooperation between the delay line units and the delay storage units. In fact, according to specific application scenarios, a plurality of functions such as adjusting the demodulated data streams forward or backward on a timeline may be performed by the cooperation between the delay line units and the delay storage units.

According to the embodiment of the present invention, the delay storage unit may be implemented as a mail-box, and the second delay adjustment amount is implemented as a ready threshold of the mail-box.

The delay line and the mail-box are used for implementing two delay adjustment mechanisms. The delay line achieves delay by beating output of a register, and usually has a relatively small delay range in order to avoid an excessive logic scale of the delay line. The mail-box may be used as a clock domain conversion device between an RF interface device and a subsequent Digital Front End (DFE) module, and is usually implemented by a First In First Out (FIFO) memory. In the embodiment of the present invention, the delay adjustment is achieved by buffering a "water level" relationship of data by the FIFO memory at an initial stage of the transmission of the services. In the context of the present invention, the term "water level" refers to such a concept: the FIFO memory is provided with an input port and a write clock wr_clk for the input port and is also provided with an output port and a read clock rd_clk for the output port, the write clock wr_clk and the read clock rd_clk may be clocks of two different clock domains, a water level of the FIFO memory rises when the input port writes data to the FIFO memory with the write clock wr_clk, and the water level of the FIFO memory falls when the output port reads the data from the FIFO memory with the read clock rd_clk.

After link establishment is completed, according to the water level of the buffered data and the second delay adjustment amount (the ready threshold of the mail-box) set in the management frame, the delay storage unit (mail-box) pulls up a ready output signal when the water level reaches the ready threshold of the mail-box. Every time the link establishment is completed, once being pulled up, the ready output signal is kept at a high level until the ready output signal is pulled down after link disconnection. After detecting that the ready output signal is pulled up, a subsequent module (e.g., a DFE module) starts reading the data from a corresponding mail-box for subsequent processing.

One of the functions of the mail-box is to achieve clock domain conversion, so that the mail-box needs to absorb frequency offset and jitter of the write clock wr_clk and the read clock rd_clk of the FIFO memory. In order to ensure that the FIFO memory is not in an abnormal state such as "empty/full", a data security water level is usually reserved in the FIFO memory, and may be determined based on clock indexes of the write clock wr_clk and the read clock rd_clk in system design. In the embodiment of the present invention, a water level of a service delay jitter range is added based on the data security water level to form the ready threshold of the mail-box, so that the mail-box can perform delay adjustment on the data to realize fixed delays or perform the plurality of functions such as adjusting data streams forward or backward on a timeline according to specific application scenarios.

According to the embodiment of the present invention, the delay storage unit 3032 is configured to receive, in a clock domain of an RF interface, the data subjected to delay processing from the delay line unit 3031 corresponding to the delay storage unit 3032 and store the data subjected to delay processing, and in a case where a size of the data stored in the delay storage unit 3032 is greater than or equal to the storage capacity corresponding to the second delay adjustment amount, output the stored data to a subsequent module in a clock domain of the subsequent module in response to a data read request from the subsequent module.

According to the embodiment of the present invention, the interleaving pattern is determined such that a ratio of data sizes of the plurality of data channels in the interleaving pattern is the same as a ratio of transmission bandwidths of the plurality of services. Specifically, the interleaving pattern is determined such that a ratio of respective numbers of unit data blocks of the plurality of data channels in the interleaving pattern is the same as the ratio of the transmission bandwidths of the plurality of services.

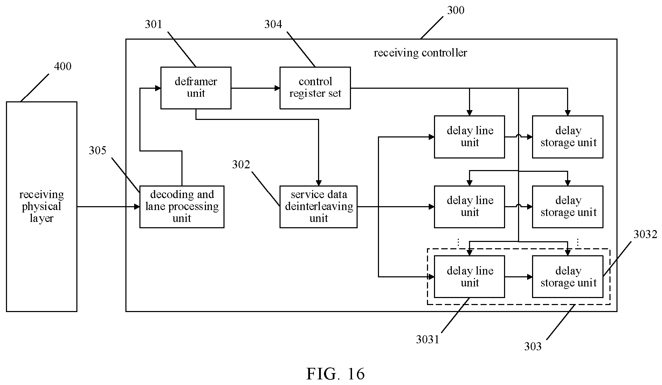

FIG. 16 is another schematic block diagram of a receiving controller of an RF interface receiving device according to an embodiment of the present invention.

As shown in FIG. 16, according to the embodiment of the present invention, the receiving controller 300 may further include a control register set 304. In a case where the management frame is obtained by deframing the input data, the control register set 304 is refreshed based on the management frame.

The service data deinterleaving unit 302 may acquire the interleaving pattern by reading a register in the control register set 304. The delay unit 303 (including the delay line unit 3031 and the delay storage unit 3032) may acquire the delay adjustment amount (including first delay adjustment amount and second delay adjustment amount) by reading a register in the control register set 304.

As shown in FIG. 16, according to the embodiment of the present invention, the receiving controller 300 may further include a decoding and lane processing unit 305 connected to the deframer unit 301. The decoding and lane processing unit 305 is configured to decode the data on each lane, align delays of all activated lanes, perform lane merging and de-laning functions, and provide a physical frame obtained after de-laning for the deframer unit 301.

The decoding and lane processing unit 305 aligns the delays of all the activated lanes after performing PCS decoding for each lane, and then performs the lane merging and de-laning functions. Reference may be made to a lane demapping process described in the DigRF V4 interface specification of the MIPI for lane merging and de-laning processes, and the physical frame obtained after the de-laning may be output to the deframer unit 301.

As shown in FIG. 16, the RF interface receiving device according to the embodiment of the present invention may further include a receiving physical layer 400 connected to the receiving controller 300.

According to the embodiment of the present invention, the receiving physical layer 400 performs functions such as equalization, clock recovery, receiving and filtering, serial/parallel conversion, and bit width conversion on each lane, and the output from all the lanes activated by the receiving physical layer 400 is connected to the decoding and lane processing unit 305. An implementation of the receiving physical layer 400 is not limited in the present invention.

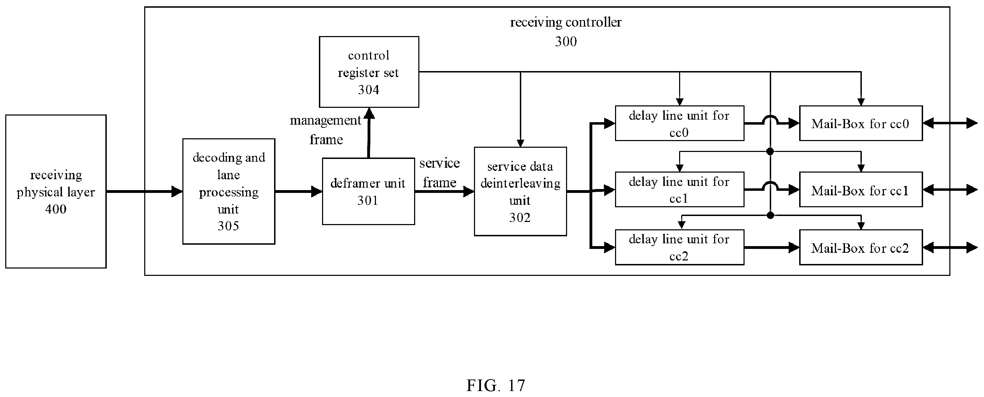

FIG. 17 is a schematic block diagram of an RF interface receiving device according to an embodiment of the present invention.

As shown in FIG. 17, the deframer unit 301 sends the service frame obtained by deframing to the service data deinterleaving unit 302, and the control register set 304 is refreshed according to the management frame when the management frame is obtained by deframing. The service data deinterleaving unit 302 may acquire the interleaving pattern by reading the register in the control register set 304, deinterleave the service frame provided by the deframer unit 301 based on the interleaving pattern, and provide the data of each of the data channels obtained after deinterleaving for the delay line unit corresponding to each of the data channels. The delay line unit and the delay storage unit corresponding to each of the data channels acquire the first delay adjustment amount and the second delay adjustment amount by reading the register in the control register set 304, and respectively perform delay adjustment according to the acquired first delay adjustment amount and the acquired second delay adjustment amount.

An embodiment of the present invention further provides a receiving method applied to the RF interface according to the present invention.

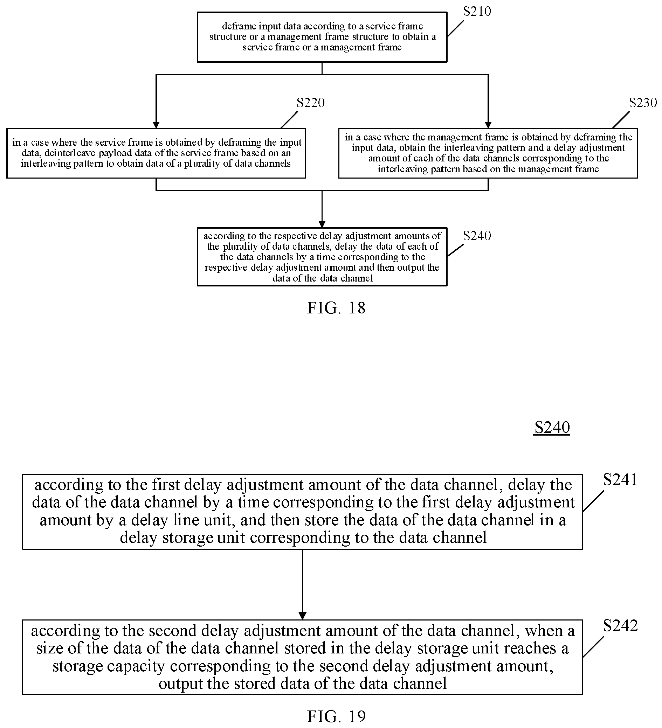

FIG. 18 is a flowchart illustrating a receiving method for an RF interface according to an embodiment of the present invention.

As shown in FIG. 18, the receiving method for the RF interface according to the embodiment of the present invention includes the following operations S210 to S240.

At operation S210, input data is deframed according to a service frame structure or a management frame structure to obtain a service frame or a management frame.

At operation S220, in a case where the service frame is obtained by deframing the input data, payload data of the service frame is deinterleaved based on an interleaving pattern to obtain data of a plurality of data channels.

The payload data includes interleaved data of one or more periods, the data of each of the data channels includes a plurality of unit data blocks, the interleaving pattern indicates a respective number of unit data blocks of each of the data channels included in the interleaved data of one period and an arrangement order of the unit data blocks of the plurality of data channels within one period, and the data of the plurality of data channels is serially interleaved based on the same interleaving pattern in the one or more periods.

At operation S230, in a case where the management frame is obtained by deframing the input data, the interleaving pattern and a delay adjustment amount of each of the data channels corresponding to the interleaving pattern are obtained based on the management frame.

At operation S240, according to the respective delay adjustment amounts of the plurality of data channels, the data of each of the data channels is delayed by a time corresponding to the respective delay adjustment amount and is then output.

FIG. 19 is a detailed flowchart of operation S240 in the receiving method for the RF interface according to an embodiment of the present invention.

According to the embodiment of the present invention, the delay adjustment amount includes a first delay adjustment amount and a second delay adjustment amount. As shown in FIG. 19, according to the respective delay adjustment amounts of the plurality of data channels, delaying the data of each of the data channels by the time corresponding to the respective delay adjustment amount and then outputting the data of the data channel (i.e., operation S240) includes the following operations S241 and S242.

At operation S241, according to the first delay adjustment amount of the data channel, the data of the data channel is delayed by a time corresponding to the first delay adjustment amount by a delay line unit, and is then stored in a delay storage unit corresponding to the data channel.

At operation S242, according to the second delay adjustment amount of the data channel, when a size of the data of the data channel stored in the delay storage unit reaches a storage capacity corresponding to the second delay adjustment amount, the stored data of the data channel is output.

According to the embodiment of the present invention, the interleaving pattern is determined such that a ratio of data sizes of the plurality of data channels in the interleaving pattern is the same as a ratio of transmission bandwidths of a plurality of services, and specifically, the interleaving pattern is determined such that a ratio of respective numbers of unit data blocks of the plurality of data channels in the interleaving pattern is the same as the ratio of the transmission bandwidths of the plurality of services.

According to the embodiment of the present invention, in a case where the management frame is obtained by deframing the input data, the method further includes: refreshing a control register set based on the management frame.

According to the embodiment of the present invention, the delay storage unit receives, in a clock domain of the RF interface, the data subjected to delay processing from the delay line unit corresponding to the delay storage unit and stores the data subjected to delay processing, and in a case where a size of the data stored in the delay storage unit is greater than or equal to the storage capacity corresponding to the second delay adjustment amount, output the stored data to a subsequent module in a clock domain of the subsequent module in response to a data read request from the subsequent module.

The receiving method for the RF interface provided in the embodiments of the present invention may be performed by the RF interface receiving device according to the embodiments of the present invention. For clarity, the corresponding technical details and technical effects will not be repeatedly described in detail here.

An embodiment of the present invention further provides a chip, including the RF interface transmitting device according to the embodiments of the present invention and the RF interface receiving device according to the embodiments of the present invention.

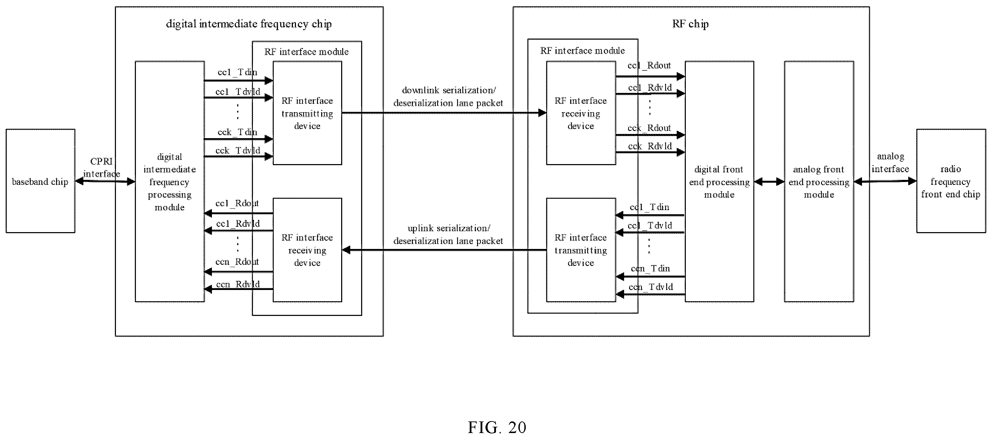

FIG. 20 illustrates a typical application scenario of the RF interface devices according to the embodiments of the present invention.

As shown in FIG. 20, the chip according to the embodiment of the present invention may include at least one of a digital intermediate frequency chip or an RF chip. Each of the digital intermediate frequency chip and the RF chip includes the RF interface transmitting device according to the embodiments of the present invention and the RF interface receiving device according to the embodiments of the present invention. The RF interface transmitting device of the digital intermediate frequency chip is connected to the RF interface receiving device of the RF chip, and the RF interface transmitting device of the RF chip is connected to the RF interface receiving device of the digital intermediate frequency chip.

The RF interface devices according to the embodiments of the present invention are high-bandwidth and low-latency RF interface devices supporting variable rate and fixed delay, and are applicable to a processing chipset of a physical layer of a 5G base station. The processing chipset of the physical layer of the 5G base station generally includes a baseband chip, a digital intermediate frequency chip, a Radio Frequency Integrated Circuit (RFIC) chip, and a Radio Frequency Front End (RFFE) chip. Modulation and demodulation processing of a physical layer signal of a 5G service is performed in the baseband chip, and the functions such as Digital Up Conversion (DUC), Digital Down Conversion (DDC), power detection, Crest Factor Reduction (CFR), and Digital Pre-Distortion (DPD) are performed in the digital intermediate frequency chip. The RF chip performs the functions such as RF signal amplification, shaping filtering, frequency mixing/frequency selection and filtering, control of RF switch, and analog-to-digital conversion (ADC)/digital-to-analog conversion (DAC). The RFFE chip performs the functions such as antenna reception and transmission. As shown in FIG. 20, the RF interface devices according to the embodiments of the present invention are high-speed interfaces for data communication between the digital intermediate frequency chip and the RF chip.

In the typical application scenario shown in FIG. 20, a downlink direction shown in FIG. 20 is a transmitting direction, and the baseband chip of the base station sends service data of a plurality of cc services which is modulated and demodulated to the digital intermediate frequency chip via a Common Public Radio Interface (CPRI) for processing; and after performing DUC, CFR, and DPD by a digital intermediate frequency processing module in the digital intermediate frequency chip, the service data is transmitted to the RF chip via an RF interface for processing. In the example illustrated by FIG. 20, a DFE processing module in the RF chip receives service data of k Component Carriers (CCs) cc1 to cck of different service groups in the downlink direction, where k is an integer greater than or equal to 1; and in an uplink direction, the digital intermediate frequency processing module in the digital intermediate frequency chip receives service data of n CCs cc1 to ccn output from the DFE processing module in the RF chip via the RF interface, where n is an integer greater than or equal to 1. Since an uplink and a downlink of service processing at the physical layer of the base station are completely asymmetric, k and n are independent of each other.

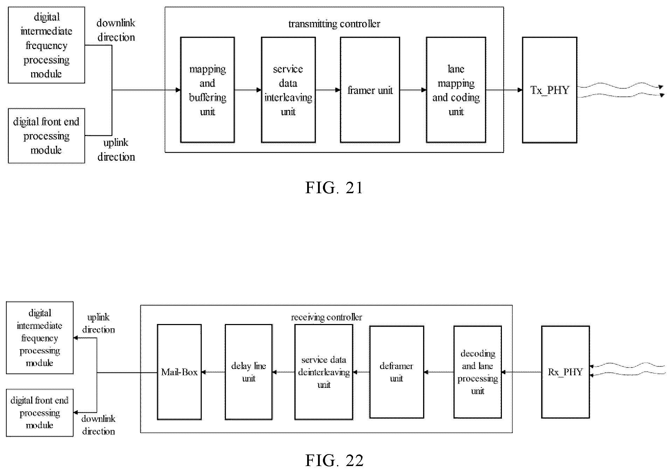

The RF interface transmitting device according to the embodiments of the present invention is located on a chip on which a source is located, such as a digital intermediate frequency chip on a downlink or an RF chip on an uplink in a base station system. The RF interface receiving device according to the embodiments of the present invention is located on a chip where a destination is located, such as an RF chip on the downlink or a digital intermediate frequency chip on the uplink in the base station system. Each RF interface device includes a controller and a physical layer (PHY). The RF interface transmitting device includes the transmitting controller and the transmitting physical layer (Tx_PHY), and FIG. 21 illustrates a connection relationship between the transmitting controller and the transmitting physical layer. The RF interface receiving device includes the receiving controller and the receiving physical layer (Rx_PHY), and FIG. 22 illustrates a connection relationship between the receiving controller and the receiving physical layer.

An embodiment of the present invention further provides a base station including the chip according to the embodiment of the present invention.

An embodiment of the present invention further provides a terminal device including the chip according to the embodiment of the present invention.

It should be noted that the RF interface devices according to the embodiments of the present invention are applicable to a base station, and are also applicable to point-to-point service data transmission between a digital baseband chip and an RF chip in a mobile terminal device.

It should be understood by those of ordinary skill in the art that the functional modules/units in all or some of the operations, systems and devices disclosed above may be implemented as software, firmware, hardware, or suitable combinations thereof.

If implemented as hardware, the division between the functional modules/units stated above is not necessarily corresponding to the division of physical components; and for example, one physical component may have a plurality of functions, or one function or operation may be performed through cooperation of several physical components.

Some or all of the physical components may be implemented as software executed by a processor, such as a CPU, a digital signal processor or a microprocessor, or may be implemented as hardware, or may be implemented as an integrated circuit, such as an Application Specific Integrated Circuit (ASIC). Such software may be distributed on a computer-readable medium, which may include a computer storage medium (or a nontransitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM (more specifically, an SDRAM, a DDR, etc.), an ROM, an EEPROM, a flash memory or other magnetic disks, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present invention discloses exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present invention of the appended claims.

## Claims

1. A Radio Frequency, called RF, interface transmitting device, comprising a transmitting controller (100), and the transmitting controller (100) comprising a service data interleaving unit (101), a delay adjustment amount determination unit (102), and a framer unit (103), wherein
the service data interleaving unit (101) is configured to:
serially interleave data of a plurality of data channels based on a current interleaving pattern to form interleaved data of one or more periods, wherein the data of each of the data channels comprises a plurality of unit data blocks, the interleaving pattern indicates a respective number of unit data blocks of each of the data channels comprised in the interleaved data of one period and an arrangement order of the unit data blocks of the plurality of data channels within one period, and the data of the plurality of data channels is serially interleaved based on the same interleaving pattern in the one or more periods, wherein the plurality of data channels correspond to a plurality of services, respectively,
the delay adjustment amount determination unit (102) is configured to:
determine a delay adjustment amount of each of the data channels corresponding to the current interleaving pattern, wherein in a case where a position of a unit data block of one data channel among the plurality of data channels in the current interleaving pattern is shifted by m unit data blocks along a first direction relative to a position of the unit data block of the one data channel in a previous interleaving pattern, a historical delay adjustment amount of the one data channel corresponding to the previous interleaving pattern is shifted by m unit data blocks along a direction opposite to the first direction and then determined as the delay adjustment amount of the one data channel corresponding to the current interleaving pattern, wherein m is an integer greater than or equal to 1, and
the framer unit (103) is configured to:
form a service frame based on the interleaved data, wherein the interleaved data is filled into a payload area of the service frame as payload data, and
form a management frame, wherein the management frame comprises information of the delay adjustment amount of each of the data channels corresponding to the current interleaving pattern.

2. The RF interface transmitting device of claim 1, wherein the delay adjustment amount comprises a first delay adjustment amount and a second delay adjustment amount, and the delay adjustment amount determination unit (102) is configured to:
in a case where the position of the unit data block of the one data channel among the plurality of data channels in the current interleaving pattern is shifted by m unit data blocks along the first direction relative to the position of the unit data block of the one data channel in the previous interleaving pattern, shift a first historical delay adjustment amount of the one data channel corresponding to the previous interleaving pattern by m unit data blocks along the direction opposite to the first direction;
in a case where the shifted first historical delay adjustment amount is a negative number, set the first delay adjustment amount of the one data channel corresponding to the current interleaving pattern to be 0, and set a difference between a second historical delay adjustment amount of the one data channel corresponding to the previous interleaving pattern and a size of a first number of unit data blocks as the second delay adjustment amount of the one data channel corresponding to the current interleaving pattern, wherein the first number is an absolute value of the negative number; and
in a case where the shifted first historical delay adjustment amount is not a negative number, set the shifted first historical delay adjustment amount as the first delay adjustment amount of the one data channel corresponding to the current interleaving pattern, and set the second delay adjustment amount of the one data channel corresponding to the current interleaving pattern to be equal to the second historical delay adjustment amount of the one data channel corresponding to the previous interleaving pattern.

3. The RF interface transmitting device of claim 2, wherein
the first delay adjustment amount of each of the data channels is configured to instruct a receiving side to delay the data of the data channel obtained after deinterleaving by a time corresponding to the first delay adjustment amount and then send the data of the data channel to a delay storage unit (3032) corresponding to the data channel, and
the second delay adjustment amount of each of the data channels is configured to instruct the receiving side to output the data of the data channel when a size of the data of the data channel stored in the delay storage unit (3032) corresponding to the data channel reaches a storage capacity corresponding to the second delay adjustment amount.

4. The RF interface transmitting device of claim 1, wherein the transmitting controller (100) further comprises an interleaving pattern determination unit (104), and
the interleaving pattern determination unit (104) is configured to determine the interleaving pattern according to at least one of:
information of the plurality of services respectively corresponding to the plurality of data channels; or
user configuration information,
wherein the management frame further comprises information of the current interleaving pattern.

5. The RF interface transmitting device of claim 4, wherein the interleaving pattern determination unit (104) is configured to:
determine the interleaving pattern such that a ratio of data sizes of the plurality of data channels in the interleaving pattern is the same as a ratio of transmission bandwidths of the plurality of services.

6. The RF interface transmitting device of claim 1, wherein the service frame further comprises validity indication information for indicating whether the data of each of the data channels in the interleaved data is valid, wherein
the service data interleaving unit (101) is further configured to:
in a case where there is no data in one data channel among the plurality of data channels, fill invalid data as the data of the one data channel into a corresponding position of a unit data block of the one data channel in the interleaving pattern to obtain the interleaved data, and
the framer unit (103) is further configured to:
configure the validity indication information to indicate that the data of the one data channel is invalid.

7. A Radio Frequency, called RF, interface receiving device, comprising a receiving controller (300), and the receiving controller (300) comprising a deframer unit (301), a service data deinterleaving unit (302), and a plurality of delay units (303), wherein
the service data deinterleaving unit (302) is configured to:
receive payload data of a service frame provided by the deframer unit (301), and
deinterleave the payload data based on an interleaving pattern to obtain data of a plurality of data channels, wherein the payload data comprises interleaved data of one or more periods, the data of each of the data channels comprises a plurality of unit data blocks, the interleaving pattern indicates a respective number of unit data blocks of each of the data channels comprised in the interleaved data of one period and an arrangement order of the unit data blocks of the plurality of data channels within one period, and the data of the plurality of data channels is serially interleaved based on the same interleaving pattern in the one or more periods, wherein the plurality of data channels correspond to a plurality of services, respectively,
the deframer unit (301) is configured to:
deframe input data according to a service frame structure or a management frame structure to obtain the service frame or a management frame,
wherein in a case where the service frame is obtained by deframing the input data, the deframer unit (301) sends the payload data of the service frame to the service data deinterleaving unit; and
in a case where the management frame is obtained by deframing the input data, the management frame comprises information of the interleaving pattern and information of a delay adjustment amount of each of the data channels corresponding to the interleaving pattern, and
the plurality of delay units (303) correspond to the plurality of data channels respectively, and each of the delay units (303) is configured to:
according to the delay adjustment amount of a corresponding data channel, delay the data of the data channel by a time corresponding to the delay adjustment amount and then output the data of the data channel.

8. A transmitting method for a Radio Frequency, called RF, interface, comprising:
serially interleaving data of a plurality of data channels based on a current interleaving pattern to form interleaved data of one or more periods (S110), wherein the data of each of the data channels comprises a plurality of unit data blocks, the interleaving pattern indicates a respective number of unit data blocks of each of the data channels comprised in the interleaved data of one period and an arrangement order of the unit data blocks of the plurality of data channels within one period, and the data of the plurality of data channels is serially interleaved based on the same interleaving pattern in the one or more periods, wherein the plurality of data channels correspond to a plurality of services, respectively;
determining a delay adjustment amount of each of the data channels corresponding to the current interleaving pattern (S120), wherein in a case where a position of a unit data block of one data channel among the plurality of data channels in the current interleaving pattern is shifted by m unit data blocks along a first direction relative to a position of the unit data block of the one data channel in a previous interleaving pattern, a historical delay adjustment amount of the one data channel corresponding to the previous interleaving pattern is shifted by m unit data blocks along a direction opposite to the first direction and then determined as the delay adjustment amount of the one data channel corresponding to the current interleaving pattern, wherein m is an integer greater than or equal to 1;
forming a service frame based on the interleaved data (S130), wherein the interleaved data is filled into a payload area of the service frame as payload data;
forming a management frame (S140), wherein the management frame comprises information of the delay adjustment amount of each of the data channels corresponding to the current interleaving pattern; and
sending the service frame or the management frame (S150).

9. The transmitting method of claim 8, wherein the delay adjustment amount comprises a first delay adjustment amount and a second delay adjustment amount, and determining the delay adjustment amount of each of the data channels corresponding to the current interleaving pattern (S120) comprises:
in a case where the position of the unit data block of the one data channel among the plurality of data channels in the current interleaving pattern is shifted by m unit data blocks along the first direction relative to the position of the unit data block of the one data channel in the previous interleaving pattern, shifting a first historical delay adjustment amount of the one data channel corresponding to the previous interleaving pattern by m unit data blocks along the direction opposite to the first direction (S121);
in a case where the shifted first historical delay adjustment amount is a negative number, setting the first delay adjustment amount of the one data channel corresponding to the current interleaving pattern to be 0, and setting a difference between a second historical delay adjustment amount of the one data channel corresponding to the previous interleaving pattern and a size of a first number of unit data blocks as the second delay adjustment amount of the one data channel corresponding to the current interleaving pattern (S122), wherein the first number is an absolute value of the negative number; and
in a case where the shifted first historical delay adjustment amount is not a negative number, setting the shifted first historical delay adjustment amount as the first delay adjustment amount of the one data channel corresponding to the current interleaving pattern, and setting the second delay adjustment amount of the one data channel corresponding to the current interleaving pattern to be equal to the second historical delay adjustment amount of the one data channel corresponding to the previous interleaving pattern (S123).

10. The transmitting method of claim 9, wherein
the first delay adjustment amount of each of the data channels is configured to instruct a receiving side to delay the data of the data channel obtained after deinterleaving by a time corresponding to the first delay adjustment amount and then send the data of the data channel to a delay storage unit corresponding to the data channel, and
the second delay adjustment amount of each of the data channels is configured to instruct the receiving side to output the data of the data channel when a size of the data of the data channel stored in the delay storage unit corresponding to the data channel reaches a storage capacity corresponding to the second delay adjustment amount.

11. The transmitting method of claim 8, further comprising:
determining (S101) the interleaving pattern according to at least one of:
information of the plurality of services respectively corresponding to the plurality of data channels; or
user configuration information,
wherein the management frame further comprises information of the current interleaving pattern.

12. The transmitting method of claim 11, wherein determining (S101) the interleaving pattern comprises:
determining the interleaving pattern such that a ratio of data sizes of the plurality of data channels in the interleaving pattern is the same as a ratio of transmission bandwidths of the plurality of services.

13. A receiving method for a Radio Frequency, called RF, interface, comprising:
deframing input data according to a service frame structure or a management frame structure to obtain a service frame or a management frame (S210);
in a case where the service frame is obtained by deframing the input data, deinterleaving payload data of the service frame based on an interleaving pattern to obtain data of a plurality of data channels (S220), wherein the payload data comprises interleaved data of one or more periods, the data of each of the data channels comprises a plurality of unit data blocks, the interleaving pattern indicates a respective number of unit data blocks of each of the data channels comprised in the interleaved data of one period and an arrangement order of the unit data blocks of the plurality of data channels within one period, and the data of the plurality of data channels is serially interleaved based on the same interleaving pattern in the one or more periods, wherein the plurality of data channels correspond to a plurality of services, respectively;
in a case where the management frame is obtained by deframing the input data, obtaining the interleaving pattern and a delay adjustment amount of each of the data channels corresponding to the interleaving pattern based on the management frame (S230); and
according to respective delay adjustment amounts of the plurality of data channels, delaying the data of each of the data channels by a time corresponding to a respective delay adjustment amount and then outputting the data of the data channel (S240).

14. The receiving method of claim 13, wherein the delay adjustment amount comprises a first delay adjustment amount and a second delay adjustment amount,
according to the respective delay adjustment amounts of the plurality of data channels, delaying the data of each of the data channels by the time corresponding to the respective delay adjustment amount and then outputting the data of the data channel (S240) comprises:
according to the first delay adjustment amount of the data channel, delaying the data of the data channel by a time corresponding to the first delay adjustment amount by a delay line unit, and then storing the data of the data channel in a delay storage unit corresponding to the data channel (S241); and
according to the second delay adjustment amount of the data channel, when a size of the data of the data channel stored in the delay storage unit reaches a storage capacity corresponding to the second delay adjustment amount, outputting the stored data of the data channel (S242).

15. A chip, comprising the RF interface transmitting device of any one of claims 1 to 6 and the RF interface receiving device of claim 7.
